# EUROPÄISCHE PATENTANMELDUNG

(11) **EP 2 787 323 A1**
(43) Veröffentlichungstag der Anmeldung: **08.10.2014**
(21) Anmeldenummer: 13162640.0
(22) Anmeldetag: 05.04.2013
(51) Int. Cl.: G01C 15/00, G01C 25/00

(54) **Vermessungsgerät mit Funktion zur Kalibrierung einer Anzeige-Bildposition eines elektronischen Fadenkreuzes**

(71) Anmelder: Leica Geosystems AG, 9435 Heerbrugg (CH)
(72) Erfinder: Kotzur, Norbert, CH-9450 Altstätten (CH); Zogg, Hans-Martin, CH-8592 Uttwil (CH); Gächter Toya, Stefan Martin Benjamin, CH-9008 St. Gallen (CH)
(74) Vertreter: Gyaja, Christoph Benjamin

(57) **Zusammenfassung**

>

## Beschreibung

Die Erfindung betrifft ein Vermessungsgerät mit in der Anzieleinheit integrierter koaxialer Kamera, insbesondere Video-Theodolit oder Video-Tachymeter, nach dem Oberbegriff des Anspruchs 1, ein Verfahren für ein solches Vermessungsgerät nach dem Oberbegriff des Anspruchs 14 sowie ein Computerprogrammprodukt nach dem Oberbegriff des Anspruchs 15.

Zum Vermessen eines Zielpunktes sind seit der Antike eine Vielzahl von geodätischen Verfahren bzw. geodätischen Geräten bekannt. Als räumliche Standarddaten werden dabei Entfernung und Winkel von einem Messgerät zum zu vermessenden Zielpunkt aufgenommen sowie insbesondere der Ort des Messgerätes nebst evtl. vorhandenen Bezugspunkten erfasst.

Ein allgemein bekanntes Beispiel für solche Vermessungsgeräte bzw. geodätische Geräte stellt ein Theodolit, ein Tachymeter oder eine Totalstation dar, die auch als elektronischer Tachymeter oder Computer-Tachymeter bezeichnet wird. Eine solche geodätische Messvorrichtung des Stands der Technik ist beispielsweise in der Veröffentlichungsschrift EP 1 686 350 beschrieben. Derartige Geräte verfügen über elektrosensorische Winkel-und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen weiters über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Je nach Ausführung des zu vermessenden Zielpunkts variiert die beim Vermessungsvorgang erzielbare Messgenauigkeit. Wird der Zielpunkt beispielsweise durch einen speziell zur Vermessung ausgebildeten Zielreflektor - wie ein Rundumprisma - dargestellt, so können wesentlich genauere Messergebnisse erreicht werden als bei einer reflektorlosen Messung beispielsweise zu einem zu vermessenden Punkt einer Hauswand. Dies liegt unter anderem daran, dass der ausgesendete optische Messstrahl einen nicht punktförmigen sondern flächigen Strahlquerschnitt aufweist und somit nicht nur am eigentlich zu vermessenden Zielpunkt gestreute Messstrahlung empfangen wird, sondern auch von Punkten in der unmittelbaren Sichtfeldumgebung des Zielpunktes, die ebenso mit der Messstrahlung beaufschlagt werden. Beispielsweise beeinflusst in bekannter Weise die Rauhigkeit der Oberfläche des zu vermessenden Punktes die Genauigkeiten von reflektorlosen Messungen.

Zum Anvisieren bzw. Anzielen eines zu vermessenden Zielpunkts weisen gattungsgemässe Vermessungsgeräte eine Anzieleinrichtung (wie ein Teleskop) auf. In einer einfachen Ausführungsvariante ist die Visiereinrichtung beispielsweise als Zielfernrohr ausgebildet. Moderne Geräte können ausserdem eine in das Zielfernrohr integrierte Kamera zur Erfassung eines Bildes aufweisen, wobei das erfasste Bild insbesondere als Live-Bild auf einem Display der Totalstation und/oder einem Display des zur Fernsteuerung verwendeten Peripheriegeräts - wie eines Datenloggers - angezeigt werden kann. Die Optik der Visiereinrichtung kann dabei einen manuellen Fokus - beispielsweise eine Stellschraube zur Veränderung der Fokusposition der Optik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 19710722, der DE 19926706 oder der DE 19949580 bekannt.

Das optische System bzw. der optische Sichtkanal der Anzieleinrichtung enthält insbesondere eine Objektivlinsengruppe, eine Fokussierlinsengruppe und ein Okular, die in dieser Reihenfolge von der Objektseite her angeordnet sind. Die Position der Fokussierlinsengruppe wird abhängig von der Objektentfernung so eingestellt, dass ein scharfes Objektbild auf einem in der Scharfstellebene angeordneten optischen Element mit Anzielmarkierung entsteht (insbesondere Retikel oder Strichplatte, oder Platte mit Fadenkreuzmarkierung und Strichmarkierungen). Dieses optische Element mit dem in dieser Ebene erzeugten Bild kann dann durch das Okular betrachtet werden.

Die zusätzlich zum Direktsichtkanal vorgesehene koaxiale Kamera (z.B. mit CCD- oder CMOS-Flächensensor) kann in einer weiteren in der Teleskopoptik vorgesehenen Bildebene angeordnet sein, wofür eine Auskopplung eines Teillichtstrahls über einen Strahlteiler vorgesehen sein kann, sodass mit der Kamera ein Bild (bzw. eine Bildserie oder ein Video-Stream) durch das Objektiv hindurch aufnehmbar ist.

Des Weiteren kann für die koaxiale elektronische Distanzmessung ein zusätzlicher separater Sende- und Empfangskanalzweig vorgesehen sein. Zudem weisen gängige Vermessungsgeräte inzwischen eine automatische Zielverfolgungs-Funktion (ATR: "Automatic Target Recognition") auf, für die eine weitere separate ATR-Lichtquelle - z.B. ein Multimodefaserausgang, der Licht mit einer weiteren definierten Wellenlänge emittiert - sowie ein spezieller ATR-Kamerasensor zusätzlich im Teleskop integriert sind.

Um Verzeichnungen, Farbstiche oder eine Vignettierung - d.h. einen Helligkeitsabfall in Randbereichen des beobachtbaren Sichtfelds - zu vermeiden, sind enorm hohe Anforderungen an die einzelnen optischen Komponenten gegeben. Demnach sind im Allgemeinen speziell und aufwändig beschichtete Optiken zur Aus- und Einkopplung einzelner Wellenlängen erforderlich, wobei trotz Beschichtung das visuelle Band eine möglichst farbgetreue Darstellung erlauben soll. Zudem bedingt die hohe Komplexität des Teleskops einen hohen Aufwand für die erforderliche hochpräzise Montage und Justage der optischen Komponenten.

Beispielhaft ist der Aufbau gattungsgemässer Zielfernrohre von geodätischen Geräten in den Veröffentlichungsschriften EP 1 081 459 oder EP 1 662 278 gezeigt.

Bei einer typischen Ein-Mann-Vermessungsaufgabe mit Zielreflektor wird beispielsweise im Gelände eine Totalstation aufgestellt. Der Benutzer bewegt eine handgehaltene Vermessungsstange, die den Zielreflektor trägt, an einen zu vermessenden Zielpunkt, wobei daraufhin die Position des Zielreflektors und somit des Zielpunkts wie folgt bestimmt werden kann. Die Steuerung der Totalstation erfolgt insbesondere ferngesteuert durch den die Vermessungsstange tragenden Benutzer mittels eines in Funkverbindung zur Totalstation stehenden Datenloggers. Der Datenlogger kann dabei an der mit dem Zielreflektor ausgestatteten Vermessungsstange angebracht oder neben der Vermessungsstange zusätzlich durch den Benutzer handgehalten werden.

Das Anvisieren eines Ziels kann dabei im Allgemeinen entweder unter Verwendung des im Teleskop/Zielfernrohr vorgesehenen physischen Fadenkreuzes oder mittels eines dem Benutzer im Display der Basisstation (oder des Datenloggers) angezeigten Live-Bildes und diesem überlagertem elektronischem Fadenkreuz erfolgen, das von der koaxial im Zielfernrohr angeordneten Kamera als Visiereinrichtung der Totalstation bereitgestellt wird. Demnach kann der Benutzer die Totalstation anhand des Live-Bildes entsprechend auf das gewünschte, im Live-Bild erkennbare Ziel ausrichten, wozu im angezeigten Live-Bild der koaxialen Kamera ein künstliches (also elektronisches) Fadenkreuz überlagert angezeigt werden kann. Die Bildposition, an welcher das elektronische Fadenkreuz angezeigt werden soll, soll dabei möglichst so gewählt sein, dass die dadurch indizierte Raumrichtung möglichst genau mit der jener Richtung korrespondiert, welche durch das im Teleskop integrierte physische optische Element mit Anzielmarkierung (also etwa dem Retikel) indiziert wird. Dies unabhängig davon, ob die durch das Retikel indizierte Richtung (Anzielrichtung) selbst nochmals einen Fehler gegenüber der eigentlichen Messrichtung (also der Richtung, in welche letztendlich die Messstrahlung ausgesendet wird und somit die Messrichtung darstellt) aufweist. Dieser Richtungsfehler zwischen Anzielrichtung und Messrichtung wird dabei unabhängig vom Problem der Positionierung des elektronischen Fadenkreuzes im Bild behandelt und ist separat zu betrachten.

Da ein physisches Re-Kalibrieren (Re-Justieren) der durch das physische optische Element mit Anzielmarkierung indizierten Anzielrichtung, sodass diese mit der Messrichtung übereinstimmt, aufwändig sein kann und bei einem Anzielen über Durchsicht durch das Teleskop verglichen mit einem Anzielen über Betrachtung des Displaybilds mit dem künstlichen Fadenkreuz keine Unterschiede vorhanden sein sollen, soll bei einer idealen Videototalstation das künstliche Fadenkreuz möglichst exakt dieselbe (Anziel-)Richtung indizieren wie die physische Anzielmarkierung. Um das künstliche Fadenkreuz möglichst treu an einer dementsprechenden Stelle im Displaybild anzuzeigen, wird werksseitig nach Zusammenbau des Vermessungsgeräts eine Kalibrierung (mit Bestimmung von entsprechenden Kalibrierparametern) durchgeführt. Eine solche Werks-Kalibrierung, wie sie dem Fachmann auf dem Gebiet des Vermessungsgerätebaus an sich bekannt ist, stellt eine Beziehung her zwischen dem Mess-Koordinatensystem des Vermessungsgeräts und dem Kamera-Koordinatensystem unter Berücksichtigung der aktuelle Vermessungsgerätegeometrie. Beispiele für solche bekannte Werkskalibrierungen sind etwa in den Patentliteratur-Veröffentlichungen US 7,982,866, US 7,623,224 und EP 1 695 030 beschrieben, wobei jedoch ein hinsichtlich dem erforderlichen Umfeld und den Messbedingungen aufwändiges Vorgehen basierend auf Kamerabildaufnahmen von bekannten Zielmarken erforderlich ist. Im selben Zuge können mit derartigen Werkskalibrierungen in bekannter Weise auch Kalibrierparameter bezüglich Steh- und Kippachsfehler (Richtungsfehler) oder einer Deplatzierung von Kamerakomponententeilen ermittelt werden.

Allerdings bleiben derartige Fehler im Verlauf der Zeit nicht stabil. So werden diese beeinflusst beispielsweise durch physische Erschütterung (etwa während Transports), durch Temperatureinflüsse oder durch andere sich im Verlauf der Zeit ändernde Materialeigenschaften.

Zwar wird daher oft in bekannter Weise vor Erledigung einer Vermessungsaufgabe eine durch den Vermesser selbst im Feld durchführbare Feldkalibrierung bezüglich Steh- und Kippachsfehler gemacht (z.B. bekannt als Zweilagenmessung oder Umschlagsmessung, in welcher ein identisches Ziel nacheinander einmal in einer ersten Lage (Face I) und einmal in einer zweiten, umgeschlagenen Lage des Teleskops (Face II) über das physische Retikel angezielt wird und jeweils die Winkel gemessen werden). Allerdings kann es dann dazu kommen, dass bei späterer Verwendung des Displays zur Anzielung eines Ziels (also des elektroinischen Fadenkreuzes) sich eine Abweichung bei der Zielkoordinatenbestimmung ergeben kann gegenüber einer Anzielung anhand vom physischen Retikel.

Aufgabe der Erfindung ist es, dieses Problem zu vermindern bzw. zu beheben, nämlich dass mit der Zeit und/oder unter bestimmten Bedingungen (wie etwa nach einer Erschütterung) die bei der Werkskalibrierung gespeicherten Kalibrierparameter hinsichtlich der Bild-Position, an welcher das elektronische Fadenkreuz einzublenden ist, hinsichtlich Konkordanz mit der physischen Anzielmarkierung unstimmig bzw. ungenau wird und somit Fehler entstehen können.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das die Erfindung betreffende Vermessungsgerät, insbesondere ein Video-Theodolit oder ein Video-Tachymeter, umfasst dabei mindestens eine Basis, eine dazu schwenkbare Stütze, eine dazu schwenkbare Anzieleinheit, Winkelmesser zur Messung von Schwenkstellungen von der Stütze und der Anzieleinheit, eine Auswerte- und Steuereinheit, und ein Display.

Die Anzieleinheit ist dabei mit einer einen optischen Strahlengang definierenden Teleskop-Optik ausgestattet und umfasst ein Objektiv, eine eine Anzielrichtung definierende physische Anzielmarkierung (insbesondere ein Retikel), ein Okular und eine Kamera zur Aufnahme eines Bildes durch das Objektiv.

Die Auswerte- und Steuereinheit enthält dabei gespeicherte Kalibrierparameter bezüglich einer die Anzielrichtung indizierenden Bildposition im aufgenommenen Bild als Anziel-Bildposition und das Display wird dabei entsprechend angesteuert bzw. ist dazu ausgelegt, um ein mit der Kamera aufgenommenes Bild zusammen mit einer Markierung für die Anziel-Bildposition als Anzielhilfe anzuzeigen, insbesondere ein elektronisches Fadenkreuz, das derart dem Bild überlagert bzw. ins Bild eingeblendet dargestellt wird, dass dessen Fadenkreuzmittelpunkt auf die Anziel-Bildposition fällt.

Um nun auch nach Beeinflussung der Geometrie zwischen der physischen Anzielmarkierung und dem Kamerakomponententeil in der Anzieleinheit für eine (nach der Beeinflussung ggf. nicht mehr hinlänglich existierende) Konkordanz zwischen der durch die physische Anzielmarkierung indizierten Anzielrichtung und der durch die Markierung für die Anziel-Bildposition indizierten Richtung zu überprüfen und/oder wiederherzustellen, wird im Rahmen der vorliegenden Erfindung eine Funktion - insbesondere in Form einer an der Benutzer-Geräte-Schnittstelle aufrufbaren Applikation - bereitgestellt, anhand welcher dies in wenig aufwändiger und vergleichsweise weitgehend automatisierter bzw. den Benutzer führender Weise ermöglicht ist.

Dafür ist im Rahmen der Funktion erfindungsgemäss ein spezielles Vorgehen bzw. ein spezieller Ablauf von Anzielungen - und in diesen Anziel-Stellungen jeweils erfolgenden Kalibrierungsmessungen - definiert, der im Rahmen der Funktion zu erfolgen hat.

So müssen dabei Anzielungen eines identischen Ziels sukzessiv mindestens einmal unter Verwendung der physischen Anzielmarkierung und mindestens einmal unter Verwendung der Markierung für die Anziel-Bildposition als Anzielhilfe erfolgen. Geräteseitig sind für diesen definierten Ablauf dabei Ablauf-Informationen in der Auswerte- und Steuereinheit hinterlegt.

Nach Starten der Funktion erfolgen dann automatisch gesteuert bzw. durchgeführt durch die Auswerte- und Steuereinheit
- auf einen (z.B. zum Zwecke einer Namensgebung und späteren einfacheren Bezugnahme als ersten zu bezeichnenden) Auslöser hin, der bei (etwa durch einen Benutzer getätigter) Anzielung des Ziels unter Verwendung der physischen Anzielmarkierung gebbar ist, eine Steuerung derart, dass automatisch durch die Winkelmesser eine erste Schwenkstellung von der Stütze und der Anzieleinheit gemessen und/oder durch die Kamera ein erstes Bild aufgenommen wird, und diese als erste Messdaten erfasst und einem Messdatensatz hinzugefügt werden, und
- auf einen (z.B. zum Zwecke einer Namensgebung und späteren einfacheren Bezugnahme als zweiten zu bezeichnenden) Auslöser hin, der bei (etwa durch einen Benutzer getätigter) Anzielung des Ziels unter Verwendung der Markierung für die Anziel-Bildposition gebbar ist, eine Steuerung derart, dass - zu den ersten Messdaten typkonform - automatisch durch die Winkelmesser eine zweite Schwenkstellung von der Stütze und der Anzieleinheit gemessen und/bzw. durch die Kamera ein zweites Bild aufgenommen wird, und diese als zweite Messdaten erfasst und dem Messdatensatz hinzugefügt werden.

Ferner wird dann automatisch anhand von einer korrelierten Auswertung des Messdatensatzes die Anziel-Bildposition hinsichtlich Konkordanz mit der durch die physische Anzielmarkierung definierten Anzielrichtung überprüft und/oder durch Updaten der gespeicherten Kalibrierparameter re-kalibriert.

Die geräteseitig bereitgestellte Funktion mit ihrem definierten Ablauf und die dafür gespeicherte Applikation kann in einer möglichen Ausführungsform wie folgt näher erläutert werden.

Nach Start der Funktion ist - insbesondere durch den Benutzer - die erste Messstellung mit der Abzieleinheit einzunehmen (insbesondere wobei der Benutzer dazu über einen angezeigten Indikator geräteseitig aufgefordert werden kann). Daraufhin geht das Gerät in einen Auslöser-Erwartungsmodus und -Empfangsmodus. In Kenntnis darüber, unter Verwendung von welcher der beiden Anzielhilfen nun das Ziel vom Benutzer in der ersten Messstellung angezielt wird, wird dann in diesem Modus - auf einen benutzergegebenen Auslöser hin - automatisch die erste Kalibriermessung durchgeführt. Dabei kann - neben oder zusätzlich zur Möglichkeit der geräteseitigen Vorgabe etwa durch geräteseitiges Leiten und Auffordern des Benutzers, welche Anzielhilfe für das erste Anzielen des Ziels nun zu verwenden ist - ggf. auch das benutzergegebene Auslösesignal oder ein Additiv zu diesem Signal die Information darüber enthalten, unter Verwendung von welcher der beiden Anzielhilfen nun das Ziel in dieser ersten Messstellung vom Benutzer angezielt wurde. Nach Erhalt des Auslösers werden dann weitere Komponenten des Vermessungsgeräts so angesteuert und die ersten Messdaten so erfasst, dass diese eine durch die Winkelmesser gemessene erste Schwenkstellung von der Stütze und der Anzieleinheit und/oder ein durch die Kamera aufgenommenes erstes Bild umfassen. Anschliessend werden die erfassten ersten Messdaten automatisch einem Messdatensatz hinzugefügt.

Nach Abschluss des Erfassens der ersten Messdaten kann dann beispielsweise der Benutzer durch einen geräteseitig ausgegebenen Indikator dazu aufgefordert und geleitet werden, die zweite Messstellung mit der Anzieleinheit einzunehmen, in welcher die Anzieleinheit derart auszurichten ist, dass das identische Ziel über die - hinsichtlich der für die erste Kalibriermessung verwendete - andere Anzielhilfe angezielt bzw. kollimiert ist. Daraufhin nimmt das Gerät automatisch wiederum den Auslöser-Erwartungsmodus und -Empfangsmodus ein.

In wiederum etwa durch definierte Vorgabe vorhandener Kenntnis oder durch Erhalt einer Information vom Benutzer darüber, unter Verwendung von welcher der beiden Anzielhilfen nun das Ziel vom Benutzer im Rahmen der zweiten Kalibriermessung angezielt ist, wird dann in diesem Modus - wiederum auf einen benutzergegebenen Auslöser hin - automatisch die zweite Kalibriermessung durchgeführt. Dafür werden zweite Messdaten erfasst, die eine durch die Winkelmesser gemessene zweite Schwenkstellung von der Stütze und der Anzieleinheit und/oder ein durch die Kamera aufgenommenes zweites Bild umfassen.

Eine Reihenfolge bezüglich der Anzielungen, d.h. ob nun zuerst eine Anzielung unter Verwendung der physischen Anzielmarkierung und anschliessend unter Verwendung der elektronischen Markierung zu erfolgen hat oder andersherum, kann dabei prinzipiell frei gesetzt sein/werden, entweder z.B. durch Vordefinition und definierte bekannte Vorgabe oder auch durch freie Wahl benutzerseitig. Die in den Ansprüchen verwendete Bezeichnung der Auslöser und der Messdaten (etc.) als erste und zweite Auslöser und erste und zweite Messdaten (et.) ist dabei rein zur Namensgebung und einfacheren klaren Bezugnahme zu verstehen. Relevant ist dabei - unabhängig von einer tatsächlich zur Anwendung kommenden Reihenfolge der Anzielungen - lediglich dass geräteseitig letztendlich eine entsprechende Information über die jeweils zur Anwendung gekommene Anzielhilfe (d.h. elektronisch oder physisch) vorliegt, die den in den jeweiligen Kalibrierstellungen erfassten Messdaten zugeordnet ist. Diese Information kann - wie zuvor erwähnt - entweder durch Vordefinition oder geräteseitige Vorgabe (etwa in Verbindung mit entsprechender Anleitung und Führung des Benutzers, unter Verwendung von welcher Anzielhilfe die aktuelle Anzielung durchzuführen ist, z.B. durch geräteseitiger Ausgabe eines entsprechenden Indikators wie etwa der Anzeige einer diesbezüglichen graphischen oder schriftlichen Information auf dem Display) oder auch - für den Fall, dass dies frei durch den Benutzer wählbar ist, durch Eingabe einer entsprechenden Information durch den Benutzer (z.B. durch Drücken eines bestimmten Knopfes an Gerät, was ggf. gleichzeitig als Auslöser-Vergabe fungieren kann).

Insbesondere können auch mehrere Durchgänge (also Wiederholungen) von solchen - unter Anwendung von beiden Anzielhilfen erfolgenden - Anzielungen und Kalibriermessungen durchgeführt werden (wozu der Benutzer aufgefordert werden kann oder wozu dem Benutzer wahlweise die Möglichkeit gegeben sein kann, etwa um einem Benutzer zu ermöglichen, bedarfsweise auch eine - vergleichsweise mit höherem Bestimmtheitsgrad erfolgende - Überprüfung und/oder Re-Kalibrierung durchzuführen). Dafür kann dann der Ablauf so definiert sein, dass mehrere Durchgänge von den Anzielungen durchgeführt werden. Im Rahmen der Funktion können dann automatisch gesteuert durch die Auswerte- und Steuereinheit jeweils auf einen weiteren Auslöser hin, der bei durch einen Benutzer erfolgter Anzielung des Ziels unter Verwendung der physischen Anzielmarkierung bzw. unter Verwendung der Markierung für die Anziel-Bildposition als Anzielhilfe gebbar ist, automatisch weitere Messdaten umfassend eine durch die Winkelmesser gemessene weitere Schwenkstellung von der Stütze und der Anzieleinheit und/oder ein durch die Kamera aufgenommenes weiteres Bild erfasst und dem Messdatensatz hinzugefügt werden.

Bei einem so definierten Ablauf mit mehreren Durchgängen von den Anzielungen kann ferner im Rahmen der Funktion die durch die Auswerte- und Steuereinheit automatisch durchgeführte korrelierte Auswertung des Messdatensatzes dann nach Durchführung von einem definierten Durchgang der mehrere Durchgänge von den Anzielungen, insbesondere nach jedem der Durchgänge, als Zwischenauswertung durchgeführt werden, und für die bis zur jeweiligen Zwischenauswertung angesammelten Messdaten ein Bestimmtheitsgrad und/oder Gütegrad hinsichtlich einer Neubestimmung der Anziel-Bildposition ermittelt werden. Die Auswerte- und Steuereinheit kann anhand dieses Bestimmtheitsgrad eine Information dann z.B. ableiten, ob weitere Durchgänge von Anzielungen durchzuführen sind oder ob die Funktion zu beenden ist, insbesondere wobei diese Information als Handlungs-Empfehlung dem Benutzer vermittels vorgesehener Ausgabemittel, insbesondere durch das Display visuell (graphisch oder schriftlich), ausgegeben wird.

Ferner kann in einem speziellen Ausführungsbeispiel der Ablauf so definiert sein, dass die Anzielungen in einem umgeschlagenen Zustand der Anzieleinheit wiederholt werden (d.h. dass die Anzielungen zusätzlich zur Erfolgung in einer ersten Lage der Anzieleinheit [Face I] auch in einer
- relativ zur ersten umgeschlagenen - zweiten Lage der Anzieleinheit [Face II] erfolgen. Im Rahmen der Funktion können dann automatisch gesteuert durch die Auswerte- und Steuereinheit
- auf einen weiteren (z.B. zum Zwecke einer Namensgebung als dritten zu bezeichnenden) Auslöser hin, der durch einen Benutzer bei im umgeschlagenen Zustand der Anzieleinheit (z.B. Face II) erfolgter Anzielung des Ziels unter Verwendung der physischen Anzielmarkierung gebbar ist, automatisch dritte Messdaten umfassend eine durch die Winkelmesser gemessene dritte Schwenkstellung von der Stütze und der Anzieleinheit und/oder ein durch die Kamera aufgenommenes drittes Bild erfasst und dem Messdatensatz hinzugefügt werden,

- auf einen weiteren (z.B. zum Zwecke einer Namensgebung als vierten zu bezeichnenden) Auslöser hin, der durch einen Benutzer bei im umgeschlagenen Zustand der Anzieleinheit (z.B. Face II) erfolgter Anzielung des Ziels unter Verwendung der Markierung für die Anziel-Bildposition als Anzielhilfe gebbar ist, automatisch zu den dritten Messdaten typ-konforme vierte Messdaten umfassend eine durch die Winkelmesser gemessene vierte Schwenkstellung von der Stütze und der Anzieleinheit und/bzw. ein durch die Kamera aufgenommenes viertes Bild erfasst und dem Messdatensatz hinzugefügt werden.

Um dabei die korrelierte Auswertung zu ermöglichen, ist es relevant, im Rahmen eines Durchgangs von Anzielungen und Kalibriermessungen dabei miteinander vergleichbare Typen von Daten (also beide Male eine Schwenkstellung oder beide Male ein Bild oder beide Male sowohl Schwenkstellung als auch Bild) zu erfassen und dem Messdatensatz hinzuzufügen. Werden solche Durchgänge wiederholt durchgeführt, ist es lediglich relevant, dass im Messdatensatz insgesamt letztendlich miteinander vergleichbare Messdaten gesammelt wurden. Insbesondere auch dann kann es jedoch erforderlich sein, dass wiederum eine Information vorliegt oder zugeordnet ist oder herleitbar ist, welche Anzielhilfe dabei bei der Erfassung der jeweiligen Messdaten jeweils verwendet wurde (und für den Fall, dass dabei in den verschiedenen Durchgängen auf unterschiedliche Ziele und/oder sowohl in Normal-Lage (Face I) als auch in Umschlag-Lage (Face II) der Anzieleinheit angezielt wurde, auf welches Ziel und ggf. in welcher Lage jeweils bei welchem Durchgang unter Verwendung von welcher Anzielhilfe die jeweiligen Messdaten des Messdatensatzes erfasst wurden).

Je nach dem, welcher Datentyp (Winkel-Stellungen oder Bilddaten) oder ob ggf. beide Datentypen dabei letztendlich im Rahmen des Messdatensatzes als jeweilige erste, zweite, und ggf. weitere Messdaten gesammelt wurden, sind diese auch beim korrelierten Auswerten entsprechend weiterzuverarbeiten.

Umfassen die ersten und zweiten Messdaten dabei beispielsweise zumindest eine erste und zweite Schwenkstellung, so kann im Rahmen der Funktion bei der korrelierten Auswertung des Messdatensatzes ein Unterschied zwischen der ersten und der zweiten Schwenkstellung ermittelt werden. Dieser Unterschied kann dann - unter Anwendung von gespeicherten Parametern bzgl. der Kamerageometrie und deren optische Projektionseigenschaften - für das Überprüfen und/oder das Re-Kalibrieren herangezogen werden.

Insbesondere kann dieser Unterschied - unter Anwendung von den gespeicherten Parametern bzgl. der Kamerageometrie und den optischen Projektionseigenschaften der Kamera - in einen Bildpositionsversatz übersetzt werden, um welcher die Anziel-Bildposition von einer neuen Soll-Anziel-Bildposition abweicht. Der so erhaltene Bildpositionsversatz kann dann für die Re-Kalibrierung auf die Anziel-Bildposition angewendet werden, sodass die gespeicherten Kalibrierparameter derart upgedatet werden, dass diese die neue Soll-Anziel-Bildposition als Anziel-Bildposition wiedergeben.

Umfassen die ersten und zweiten Messdaten dabei beispielsweise zumindest ein erstes und zweites Bild, so kann im Rahmen der Funktion bei der korrelierten Auswertung des Messdatensatzes anhand von Bilderkennung und unter Heranziehung des zweiten Bilds (in welchem Information darüber, welches Objekt als Ziel verwendet und anvisiert ist, direkt auslesbar ist) eine Identifikation des Ziels im ersten Bild erfolgen und eine Bildposition des identifizierten Ziels im ersten Bild als Ziel-Bildposition bestimmt werden. Daraus kann folglich eine Abweichung der Ziel-Bildposition von der Anziel-Bildposition ermittelt und diese Abweichung für das Überprüfen und/oder das Re-Kalibrieren herangezogen werden.

Insbesondere kann z.B. anhand dieser Abweichung direkt die Anziel-Bildposition überprüft werden (wobei beispielsweise ein Toleranzbereich für eine solche Abweichung vorgegeben ist und gecheckt wird, ob die Abweichung innerhalb des Toleranzbereichs liegt). Zudem kann die die Anziel-Bildposition auch direkt anhand von dieser Abweichung durch Updaten der gespeicherten Kalibrierparameter re-kalibriert, insbesondere wobei die gespeicherte Kalibrierparameter derart upgedatet werden, dass die upgedateten Kalibrierparameter dann neu die ermittelte Ziel-Bildposition als die Anziel-Bildposition wiedergeben.

Weist dabei der Messdatensatz - hinsichtlich einer Ableitung von Information über eine Konkordanz der elektronischen (digitalen) Anzielmarkierung mit der physischen Anzielmarkierung - eine Redundanz auf (z.B. durch wiederholte Durchführung der Anzielungen und Kalibriermessungen und/oder durch Erfassen von Messdaten beider Typen im Rahmen eines Durchgangs der Anzielungen), so können die jeweils - hinsichtlich Typ sowie ggf. hinsichtlich des anvisierten Ziels bzw. der zur Anwendung gekommenen Lage der Anzieleinheit (Face I oder Face II) - miteinander vergleichbaren Messdaten paarweise miteinander korreliert ausgewertet werden (etwa als Zwischenauswertungen), sodass dann z.B. im Rahmen einer Gesamtauswertung über aufakkumulierte Zwischenauswertungen gemittelt werden kann.

Enthält der Messdatensatz also hinsichtlich der Überprüfung und/oder Re-Kalibrierung der Anziel-Position redundante Messdaten, so kann eine solche Redundanz im Rahmen der Funktion automatisch durch die Auswerte- und Steuereinheit genutzt werden für eine Mittelung, sodass die Genauigkeit für die Überprüfung bzw. Re-Kalibrierung steigerbar ist, und/oder eine Ermittlung eines Bestimmtheitsgrads oder Gütegrads der Überprüfung bzw. Re-Kalibrierung. Alternativ oder zusätzlich kann eine solche Redundanz jedoch auch genutzt werden für eine konkomitierende (also eine in zeitlichem und vorgehensseitigem Zusammenhang mit der Überprüfung bzw. Re-Kalibrierung der Anziel-Bildposition stehende) Überprüfung bzw. Re-Kalibrierung von mindestens einem von folgenden weiteren Kalibrierparametern:
- einem Parameter bezüglich einem Richtungsfehler als Deviation der durch die physische Anzielmarkierung definierten Anzielrichtung von einer tatsächlichen Messachse [auch Kipp- und Stehachsenfehler genannt],
- einem Parameter bezüglich einem Fehler der Winkelmesser,
- einem Parameter bezüglich einer Kamerageometrie der Kamera,
- einem Parameter bezüglich einer Projektionseigenschaft der Kamera oder
- einem Parameter bezüglich eines Fehlers der optischen Achse der Kamera.

In einer speziellen Ausführungsform der Erfindung können - wie zuvor an verschiedenen Stellen bereits kurz erwähnt - Ausgabemittel zur Ausgabe von Indikatoren vorhanden sein, insbesondere wobei das Display die Ausgabemittel zur visuellen (graphischen oder schriftzugweisen) Ausgabe darstellen können. Die Ausgabemittel können dann beispielsweise durch die Auswerte- und Steuereinheit im Rahmen der Funktion derart automatisch angesteuert werden, dass ein Benutzer anhand der ausgegebenen Indikatoren durch den Ablauf von Anzielungen geführt wird, insbesondere wobei
- ein Indikator angezeigt wird zur Aufforderung des Benutzers zur jeweiligen Durchführung einer der Anzielungen entweder unter Verwendung der physischen Anzielmarkierung oder unter Verwendung der Markierung für die Anziel-Bildposition als Anzielhilfe, insbesondere wobei zudem jeweils indiziert wird, ob die jeweilige Anzielung in umgeschlagenem Zustand der Anzieleinheit durchzuführen ist oder nicht,
- ein Indikator angezeigt wird als Angabe dafür, dass eine jeweilige automatische Erfassung von Messdaten auf einen jeweiligen Auslöser hin erfolgreich abgeschlossen ist,
- nach Abschluss einer jeweiligen automatischen Erfassung von Messdaten auf einen jeweiligen Auslöser hin ein Indikator angezeigt wird als Angabe dafür, dass und welche nächste Anzielung im Rahmen des definierten Ablaufs durchzuführen ist, und/oder
- nach Abschluss einer jeweiligen automatischen Erfassung von Messdaten auf einen jeweiligen Auslöser hin ein Indikator angezeigt wird als Angabe dafür, das alle Anzielungen des Ablaufs abgeschlossen sind, insbesondere zudem mit ergänzender Angabe darüber, ob der anhand der erfolgten Anzielungen gesammelte Messdatensatz die Bild-Position hinlänglich profund überprüfbar macht bzw. die Bild-Position mit hinreichender Genauigkeit und Bestimmtheit updatebar macht.

Weist das Vermessungsgerät dabei einen Temperatursensor auf, können die gespeicherten Kalibrierparameter zudem eine temperaturabhängige Funktion für die Anziel-Bildposition enthalten, sodass die auf dem Display anzeigbare Markierung für die Anziel-Bildposition entsprechend einer aktuellen Temperatur derart setzbar ist, dass die bei unterschiedlichen Temperaturen jeweils unterschiedlich vorliegende Geometrie zwischen der physischer Anzielmarkierung und dem Displaykomponententeil in Teleskop für das Setzen der Anziel-Bildposition (damit diese jeweils korrespondiert zur physischen Anzielmarkierung) berücksichtigt wird. Im Rahmen der Funktion kann dann automatisch gesteuert durch die Auswerte- und Steuereinheit durch den Temperatursensor eine Temperatur erfasst werden und diese Temperatur durch die Auswerte- und Steuereinheit für die Überprüfung bzw. Re-Kalibrierung berücksichtigt werden.

Für die Kamera ist dabei abhängig von der Pixelanzahl des verwendeten Kamera-Flächensensor (welcher in bekannter Weise ein CCD- oder ein CMOS-Sensor sein kann) eine Kamerapixelauflösung definiert, wodurch das aufnehmbare Bild eine definierte Bildpixelauflösung aufweist.

Dennoch kann im Rahmen der Funktion automatisch durch die Auswerte- und Steuereinheit die Anziel-Bildposition ggf. mit Sub-Bildpixelauflösung überprüft und/oder durch Updaten der gespeicherten Kalibrierparameter re-kalibriert werden. Ferner ist auch für das Display - abhängig vom verwendeten Display - eine gewisse Displaypixelauflösung definiert, die bei derartigen Vermessungsgeräten für gewöhnlich kleiner ist als die Kamerapixelauflösung.

Dies ermöglicht unter anderem eine Darstellung des Kamerabildes in digitalen Zoomstufen, ohne dass damit unbedingt eine Bild-Anzeigequalitätsverschlechterung einhergeht oder dass dafür unbedingt sofort eine Interpolation erforderlich wäre.

Insbesondere aufgrund der oft vergleichsweise geringen Displayauflösung kann vorteilhaft in einer Weiterbildung der Erfindung die Markierung für die Anziel-Bildposition nun derart in einer Grau- und/oder Farbstufendarstellung angezeigt werden, dass dadurch benutzeraugenscheinlich die Bild-Position mit Sub-Displaypixelauflösung indiziert wird.

Für die Erfassung von bildlichen Messdaten im Rahmen der Kalibriermessungen und das Einblenden der elektronischen Markierung im Bild ist dabei ggf. jeweils ein entsprechender aktuell zur Anwendung kommender digitaler Zoomfaktor sowie Bild-Anzeigeausschnitt zu berücksichtigen.

Das hier durchgängig zuvor beschriebene Bild, das durch die koaxiale Kamera erfasst werden kann, stellt - wie dies gattungsgemäss üblich und im Stand der Technik hinlänglich bekannt ist - vorteilhaft für die Anzielung eines Ziels ein Live-Bild der Kamera dar, also eine von der Kamera praktisch in Echtzeit aufgenommene Bilderserie, die praktisch in Echtzeit auf dem Display angezeigt werden kann.

Wie dies ebenso im Stand der Technik hinlänglich für geodätische Vermessungsgeräte (wie für einen Video-Tachymeter oder eine Video-Totalstation) bekannt ist, kann in die Anzieleinheit ferner ein koaxialer Laser-Entfernungsmesser integriert sein.

Zudem kann das Vermessungsgerät eine mindestens die Basis, die Stütze, die Anzieleinheit und die Winkelmesser - sowie insbesondere auch die Auswerte- und Steuereinheit und das Display - umfassende Basisstation aufweisen (oft in dieser Form als das eigentliche Vermessungsgerät betrachtet). Allerdings kann das Vermessungsgerät insbesondere neben der Basisstation auch eine datenmässig mit der Basisstation verbundene und körperlich unabhängige Peripherie-Fernsteuer-Einheit aufweisen, wobei das Display und die Auswerte- und Steuereinheit entweder in der Peripherie-Fernsteuer-Einheit, oder in der Basisstation, oder - je nach Bedarf verwendbar - in der Peripherie-Fernsteuer-Einheit und der Basisstation vorgesehen sind.

Ferner kann die erfindungsgemäss bereitgestellte Funktion auch geräteseitig vollautomatisch Ablaufen, wie dies im Folgenden beispielhaft erläutert wird.

Wie dies im Stand der Technik bekannt ist, kann das Vermessungsgerät eine automatische Anziel-Funktion und ggf. automatisch Zielverfolgungs-Funktion (ATR: "Automatic Target Recognition") aufweisen, für die eine weitere separate ATR-Lichtquelle - z.B. ein Multimodefaserausgang, der Licht mit einer definierten Wellenlänge emittiert - sowie ein spezieller ATR-Kamerasensor zusätzlich im Teleskop integriert sein, sodass bei zumindest grober Anzielung eines retroreflektierenden Ziels das ATR-Licht retroreflektiert wird und somit ein Lichtreflexfleck auf dem ATR-Kamerasensor erzeugt wird, welcher hinsichtlich seiner Auftreffposition auswertbar ist und dadurch eine hockpräzise automatische Anzielung oder Verfolgung über automatisches motorisiertes Ausrichtungsändern der Anzieleinheit bewirkt werden kann. Bei Anzielung über die kalibrierte ATR-Funktion kann die Messachse des Vermessungsgeräts also automatisch auf ein retroreflektierendes Ziel ausgerichtet werden.

Weist das Vermessungsgerät nun eine solche ATR-Funktion auf und ist ferner ein Richtungsfehler von der durch die physische Anzielmarkierung indizierten Anzielrichtung gegenüber der Messachse bekannt, dann kann anhand von der ATR-Funktion nun also auch im Rahmen der erfindungsgemässen Funktion eine automatische hochpräzise Anzielung eines retroreflektierenden Ziels erfolgen. Die bei derartiger, automatischer Anzielung erfassbaren Messdaten können dann - natürlich unter Berücksichtigung des bekannten Richtungsfehlers - stellvertretend als für eine Anzielung unter Verwendung der physischen Anzielmarkierung gespeicherte Messdaten dem Messdatensatz hinzugefügt werden.

Zudem kann auch - wie dies etwa in den Patentliteratur-Publikationen EP 2 405 236 oder EP 2 397 816 beschrieben ist - eine vollautomatische Anzielung des Ziels erfolgen, die zur Anwendung kommen kann analog oder ersatzweise zu einer durch einen Benutzer anhand der elektronischen Anzielhilfe erfolgten Anzielung.

Bei einer solchen automatischen Anzielung über das Kamera-Bild kann eine automatische präzise Anzielung des Ziels (für das ggf. ein Muster oder eine Schablone elektronisch hinterlegt ist) über Bildauswerten des aufgenommenen Kamerabilds (d.h. Matchen der Schablone mit im Bild aufgenommenem Ziel) erfolgen und ein automatisches motorisiertes Ausrichten der Anzieleinheit derart bewirkt werden, dass die Anziel-Bildposition (also z.B. der Mittelpunkt des elektronischen Fadenkreuzes) auf dem relevanten Ziel-Mittelpunkt (d.h. z.B. auf einem definierten Ziel-Mittelpunkt der sich in gematchtem Zustand befindenden Schablone) zum liegen kommt.

Die bei derartiger, automatischer Anzielung dann erfassbaren Messdaten können (obwohl eine Anzeige des Bildes und einer Markeirung für die Anziel-Bildposition auf einem Display dafür nicht zwingend erforderlich ist) als für eine Anzielung unter Verwendung der elektronischen Markierung als Anzielhilfe gespeicherte Messdaten dem Messdatensatz hinzugefügt werden.

Ferner betrifft die Erfindung auch ein mit einem Vermessungsgerät durchzuführendes Verfahren zur Überprüfung und/oder Re-Kalibrierung einer Anziel-Bildposition, die durch Kalibrierparameter gegeben ist und für die eine Markierung als Anzielhilfe auf einem Display des Vermessungsgeräts zusammen mit einem durch eine Kamera des Vermessungsgeräts anzeigbarem Bild darstellbar ist, wobei die Anziel-Bildposition auf eine durch eine physische Anzielmarkierung des Vermessungsgeräts definierte Anzielrichtung Bezug nimmt, und wobei das Vermessungsgerät ausgestattet ist mit
- einer Basis,
- einer relativ zur Basis um eine erste Achse schwenkbaren Stütze,
- einer relativ zur Stütze um eine zweite Achse schwenkbaren Anzieleinheit mit einer einen optischen Strahlengang definierenden Teleskop-Optik mit
   □ einem Objektiv,
   □ der die Anzielrichtung definierenden physischen Anzielmarkierung, insbesondere einem Retikel,
   □ einem Okular und
   □ der Kamera zur Aufnahme eines Bildes durch das Objektiv,
- Winkelmesser zur Messung von Schwenkstellungen von der Stütze und der Anzieleinheit, und
- dem Display zur Anzeige eines aufgenommenen Bildes zusammen mit der Markierung, insbesondere zur Anzeige des Bildes mit überlagertem elektronischem Fadenkreuz, dessen Fadenkreuzmittelpunkt auf die Anziel-Bildposition fällt.
   Das erfindungsgemässe Verfahren ist dabei gekennzeichnet durch einen Ablauf von mindestens einem Durchgang von
- einem Anzielen eines Ziels unter Verwendung der physischen Anzielmarkierung,
- einem Erfassen von ersten Messdaten umfassend eine durch die Winkelmesser gemessene erste Schwenkstellung von der Stütze und der Anzieleinheit und/oder ein durch die Kamera aufgenommenes erstes Bild und einem Hinzufügen dieser ersten Messdaten zu einem Messdatensatz,
- einem Anzielen des identischen Ziels unter Verwendung der Markierung für die Anziel-Bildposition als Anzielhilfe,
- einem Erfassen von zu den ersten Messdaten typ-konformen zweiten Messdaten umfassend eine durch die Winkelmesser gemessene zweite Schwenkstellung von der Stütze und der Anzieleinheit und/oder ein durch die Kamera aufgenommenes zweites Bild und einem Hinzufügen dieser zweiten Messdaten zum Messdatensatz,
   sowie dadurch, dass automatisch seitens des Vermessungsgeräts ein korreliertes Auswerten des Messdatensatzes erfolgt, anhand welchem die Anziel-Bildposition hinsichtlich Konkordanz mit der durch die physische Anzielmarkierung definierten Anzielrichtung überprüft und/oder durch Updaten der Kalibrierparameter re-kalibriert wird.

Die im Rahmen des oben beschriebenen Vermessungsgeräts genannten speziellen Aspekte, Ausführungsformen und Weiterbildungen können dabei analog ebenso auch auf dieses Verfahren angewendet werden.

Ferner betrifft die Erfindung auch ein Computerprogrammprodukt mit Programmcode, der auf einem maschinenlesbaren Träger gespeichert ist und gespeicherte Informationen enthält über
- eine Anziel-Bildposition, die durch Kalibrierparameter gegeben ist und für die eine Markierung als Anzielhilfe auf einem Display eines Vermessungsgeräts zusammen mit einem durch eine Kamera des Vermessungsgeräts anzeigbarem Bild darstellbar ist, wobei die Anziel-Bildposition auf eine durch eine physische Anzielmarkierung definierte Anzielrichtung des Vermessungsgeräts Bezug nimmt, sowie
- einen Ablauf von Anzielungen eines identischen Ziels sukzessiv mindestens einmal unter Verwendung der physischen Anzielmarkierung und mindestens einmal unter Verwendung der Markierung für die Anziel-Bildposition als Anzielhilfe.

Das erfindungsgemässe Computerprogrammprodukt mit Programmcode ist dabei konfiguriert zum - wenn das Programm auf der Steuer- und Auswerteeinheit des oben beschriebenen erfindungsgemässen Vermessungsgeräts ausgeführt wird erfolgenden - automatischen Steuern bzw. Durchführen der folgenden Schritte:
- auf einen ersten Auslöser hin, der bei erfolgter Anzielung des Ziels unter Verwendung der physischen Anzielmarkierung gebbar ist, erfolgendes Erfassen von ersten Messdaten umfassend eine über die Winkelmesser gemessene erste Schwenkstellung von der Stütze und der Anzieleinheit und/oder einem durch die Kamera aufgenommenen ersten Bild und Hinzufügen dieser ersten Messdaten zu einem Messdatensatz,
- auf einen zweiten Auslöser hin, der bei erfolgter Anzielung des Ziels unter Verwendung der Markierung für die Anziel-Bildposition als Anzielhilfe gebbar ist, erfolgendes Erfassen von zu den ersten Messdaten typ-konformen zweiten Messdaten umfassend eine durch die Winkelmesser gemessene zweite Schwenkstellung von der Stütze und der Anzieleinheit und/oder einem durch die Kamera aufgenommenen zweiten Bild und Hinzufügen dieser zweiten Messdaten zum Messdatensatz,
- Überprüfen und/oder durch Updaten der gespeicherten Kalibrierparameter erfolgendes Re-Kalibrieren der Anziel-Bildposition hinsichtlich Konkordanz mit der durch die physische Anzielmarkierung definierten Anzielrichtung anhand von einer korrelierten Auswertung des Messdatensatzes.

Die im Rahmen des oben beschriebenen Vermessungsgeräts genannten speziellen Aspekte, Ausführungsformen und Weiterbildungen können dabei analog ebenso auch auf dieses Computerprogrammprodukt angewendet werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird.
Figur 7 ;
Figur 8 ;
Figur 9 ;
Figur 10 ;
Figur 11 ;
Figur 12 ;

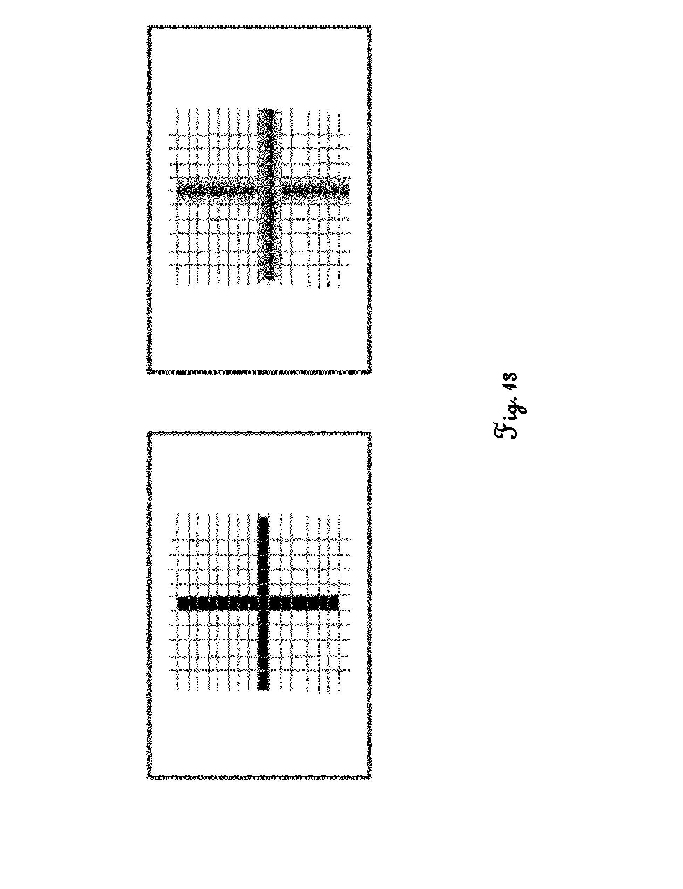

Figur 13 ; und
Figur 14 .

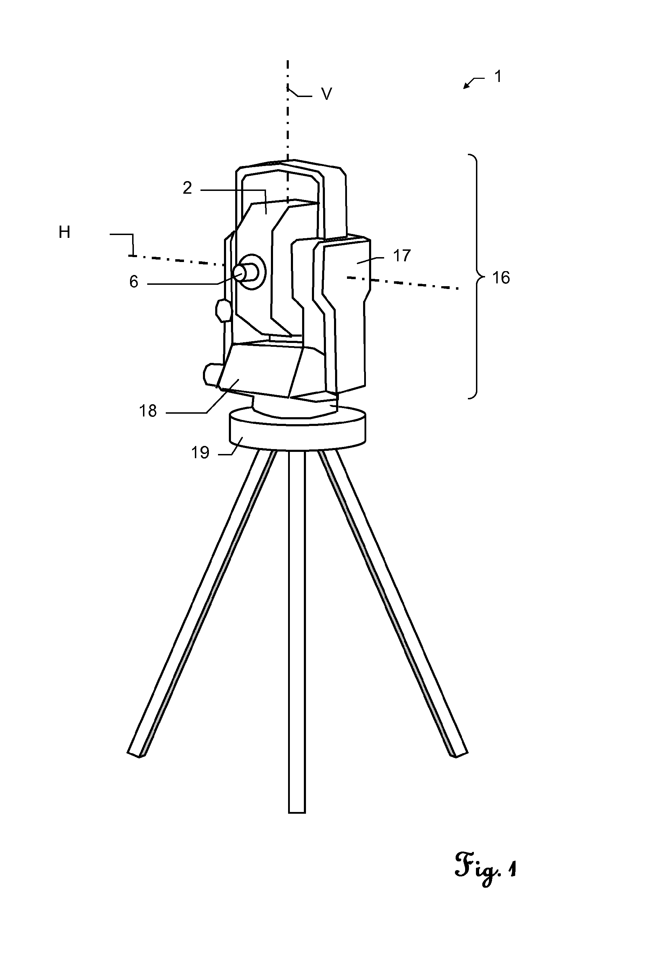

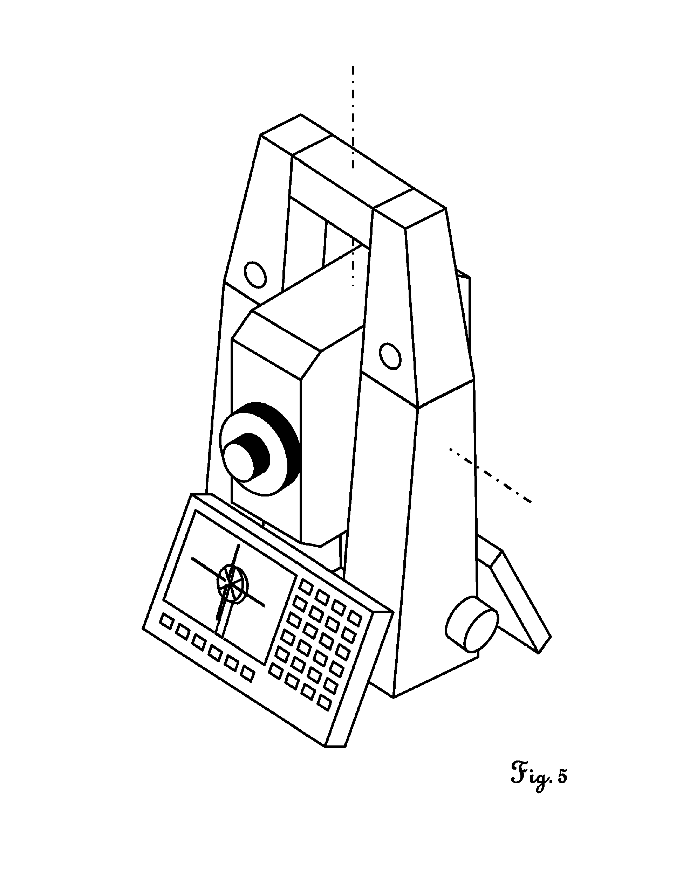

Figuren 1 und 5 zeigen ein erfindungsgemässes, als Totalstation ausgebildetes geodätisches Vermessungsgerät 1 zur Messung von Horizontalwinkeln, Vertikalwinkeln (was Schwenkstellungen von der Stütze und der Anzieleinheit entspricht) und Distanzen zu einem beabstandeten und anvisierten Ziel.

Die Totalstation kann - wie dies in Figur 1 gezeigt ist - auf einem Stativ angeordnet sein, wobei eine Basis 19 der Totalstation direkt und fest mit dem Stativ verbunden ist. Der Hauptkörper der Totalstation, der auch als Oberteil 16 bezeichnet wird, ist relativ zur Basis 19 um eine vertikale Stehachse V drehbar.

Das Oberteil 16 weist dabei eine - z.B. durch zwei Säulen gebildete - Stütze 17, eine zwischen den Säulen um die horizontale Kippachse H drehbar gelagerte Visiereinrichtung 2 sowie ein elektronisches Datenverarbeitungs- und Anzeige-Modul 18, welche durch eine Steuer- und Auswerteeinheit sowie ein Display gebildet wird, auf. Das elektronische Datenverarbeitungs- und Anzeige-Modul 18 kann in bekannter Weise zur Steuerung des Vermessungsgeräts 1 sowie zur Verarbeitung, Anzeige und Speicherung von Messdaten ausgebildet sein.

Die Anzieleinheit bzw. Visiereinrichtung 2 ist an der Stütze 17 um eine horizontale Kippachse H drehbar angeordnet und kann somit zur Ausrichtung auf ein Zielobjekt relativ zur Basis 19 horizontal und vertikal geschwenkt bzw. gekippt werden. Dabei ist die Visiereinrichtung als eine gemeinsame Visiereinrichtungs-Baueinheit ausgeführt, wobei zumindest ein Objektiv, eine Fokussieroptik, ein koaxialer Kamerasensor, eine optische Anziel-Strichkreuz-Platte und das Okular 6 in bzw. an einem gemeinsamen Visiereinrichtungs-Gehäuse angeordnet sind.

Mittels der Visiereinrichtung 2 kann ein Zielobjekt angezielt und die Entfernung von der Totalstation zu dem Zielobjekt elektrosensorisch erfasst werden. Weiters sind Mittel zum elektrosensorischen Erfassen der Winkelausrichtung des Oberteils 16 relativ zur Basis 19 und der Visiereinrichtung 2 relativ zur Stütze 17 vorgesehen. Diese elektrosensorisch erfassten Messdaten werden der Steuer-und Auswerteeinheit zugeführt und von dieser verarbeitet, so dass die Position des Zielpunkts relativ zur Totalstation durch Datenverarbeitungs- und Anzeige-Modul 18 ermittelbar, graphisch anzeigbar und speicherbar ist.

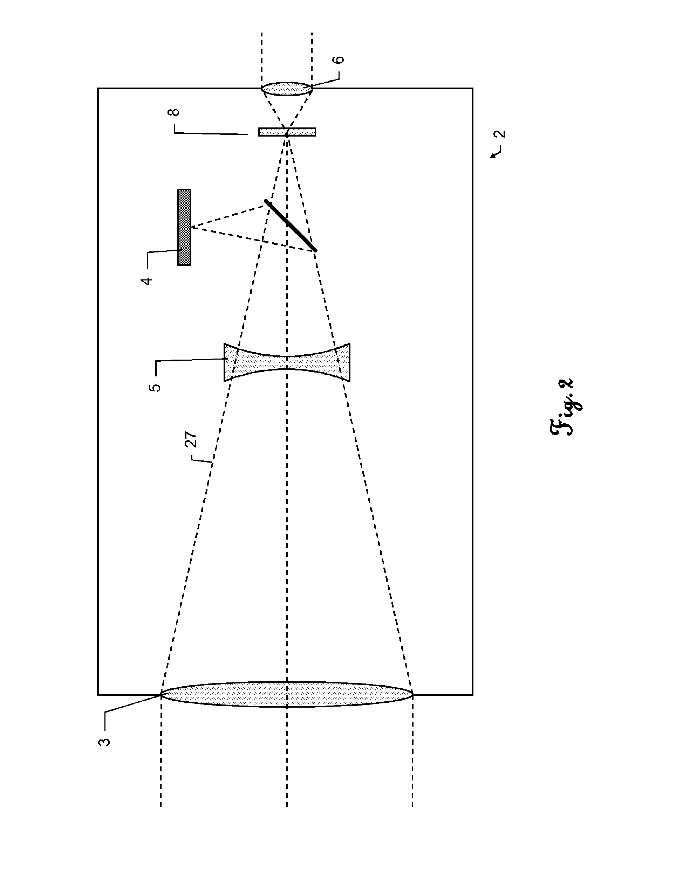

Figuren 2, 3 und 4 zeigen schematisch mögliche Ausführungsformen von der Anzieleinheit mit Teleskop-Optik, wie diese auch bereits im Stand der Technik hinlänglich bekannt sind.

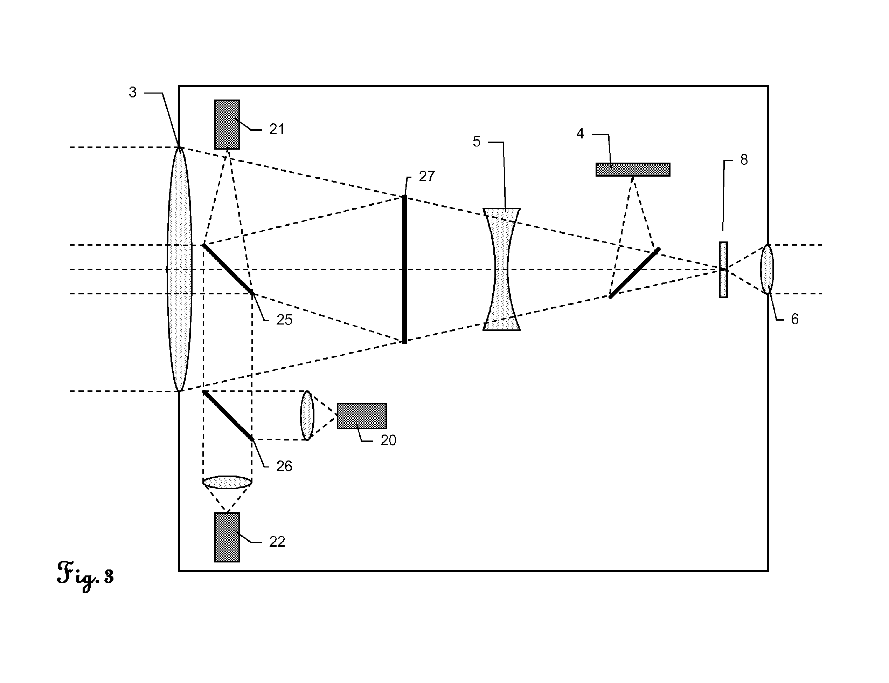

Figur 2 zeigt dabei eine vereinfachte Form der Ausführungsform, die in Figur 3 gezeigt ist. Figur 3 zeigt dabei eine refraktive Ausführungsform für eine erfindungsgemässe Visiereinrichtungsoptik.

Die Visiereinrichtungsoptik weist das Objektiv 3, die Fokussieroptik 5, einen - koaxial zur optischen Achse der Visiereinrichtung 2 ausgerichteten - Kamerasensor 4 zur Erfassung eines Kamera-Bildes, eine Fadenkreuz-Strichplatte 8 sowie ein Okular 6 auf.

Der Kamerasensor 4 ist dabei mit einem elektronischen Grafikprozessor zur Generierung eines Anzeigebilds aus dem erfassten Kamera-Bild verbunden. Grafikprozessor ist wiederum mit dem Display verbunden, sodass das generierte Anzeigebild anhand des Displays dargestellt werden kann.

Das Objektiv 3 kann z.B. auch mehrlinsig aufgebaut oder panfokal - mit veränderlichem Sichtfeld - ausgeführt sein.

Für die Distanzmessung und die automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend ein-und ausgekoppelt werden.

Die EDM-Laserquelle 20 kann z.B. EDM-Laserstrahlen im visuellen Bereich - etwa mit einer Wellenlänge von 630 nm - emittieren, sodass ein Messfleck am Zielobjekt sichtbar ist.

Zwischen dem ersten Strahlkombinierer 25 und der Fokussieroptik 5 kann dabei Strahlauskoppler 27 vorhanden sein, der die EDM-Laserstrahlen auskoppelt, hingegen das visuelle Spektrum vorteilhaft möglichst ungehindert transmittiert. Die ausgekoppelten EDM-Laserstrahlen werden durch den Strahlkombinierer 25 auf einen EDM-Empfänger 21 gelenkt.

Das in seiner Stellung veränderliche Fokussierelement 5 kann alternativ auch mehrlinsig ausgebildet sein. Vorteilhaft weist das Fokussierelement 5 eine stabile, präzise reproduzierbare Position für Objekte im Unendlichen auf, sodass eine möglichst gute erzielbare Genauigkeit bei der automatischen Feinanzielung gewährleistet werden kann.

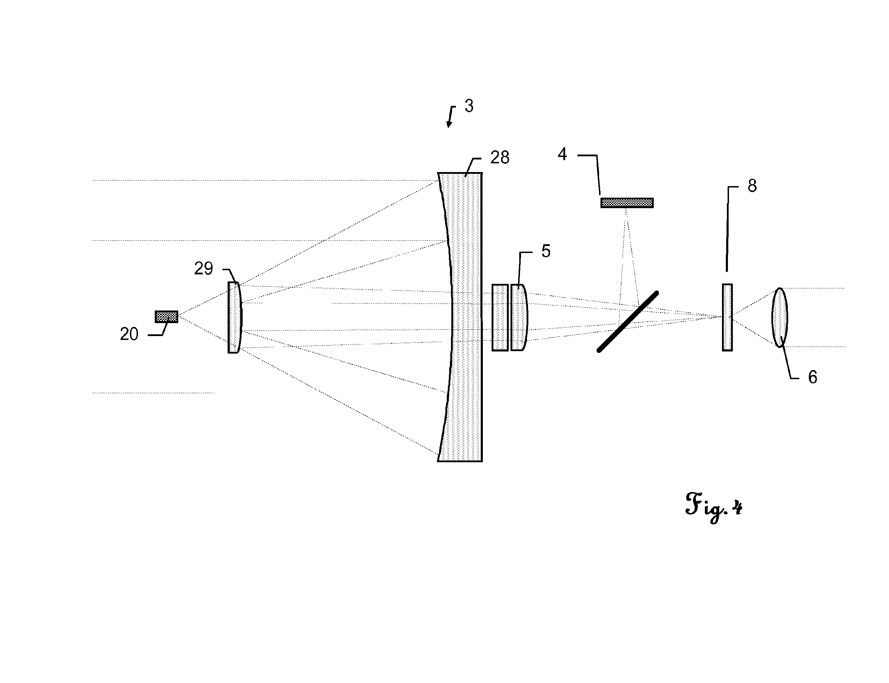

Figur 4 zeigt eine weitere Ausführungsform für eine erfindungsgemässe Visiereinrichtungsoptik. In diesem Fall ist die Visiereinrichtung als katadioptrisches System mit Spiegeloptik ausgeführt. Ein erster, konkaver Spiegel 28 dient dabei als Objektiv 3.

Ein zweiter, kleinerer Spiegel 29 ist für EDM-Laserstrahlen durchlässig ausgebildet, sodass die anhand der EDM-Laserquelle 20 ausgesendeten EDM-Laserstrahlen für die Distanzmessung durch den zweiten Spiegel 29 transmittiert werden.

Anhand der mehrlinsigen Fokussieroptik 5 wird ein Bild des Sichtfeldbereichs auf den Kamerasensor 4 fokussiert und als Kamera-Bild erfasst. Zudem wird auch in der Ebene der Strichplatte 8 ein Zwischenbild erzeugt, das von einem Benutzer durch das Okular 6 betrachtet werden kann.

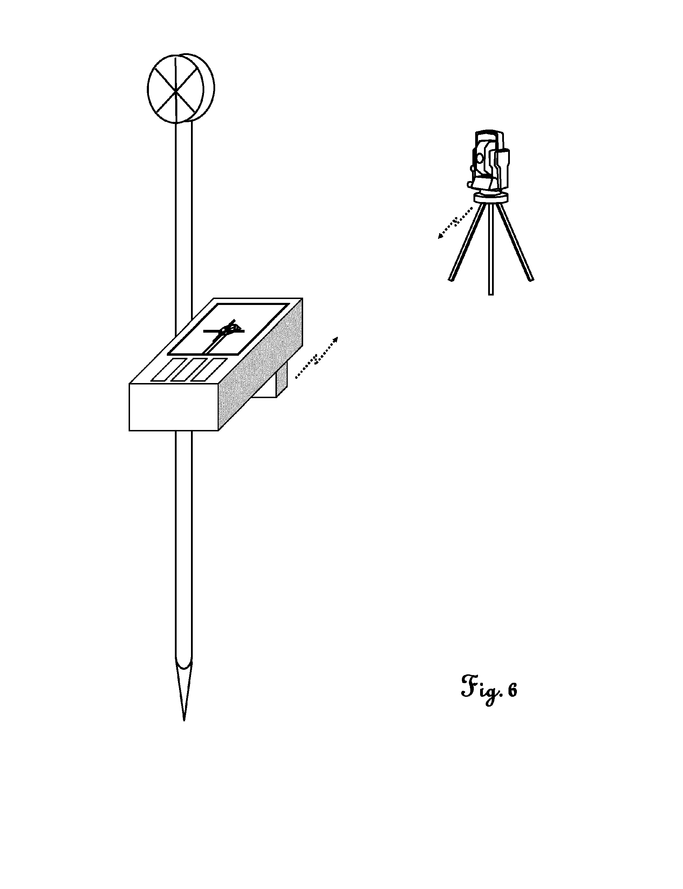

Figur 6 zeigt eine körperlich von der Basisstation (im Hintergrund ebenso gezeigt) unabhängige Peripherie-Fernsteuer-Einheit mit eigenem zusätzlichem Display und eigener zusätzlicher Auswerte- und Steuereinheit.

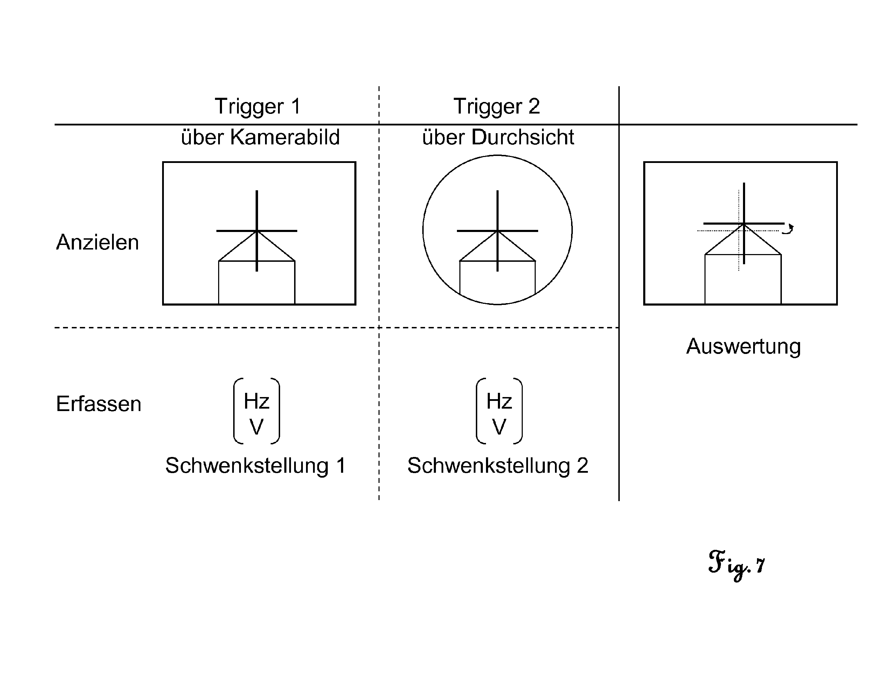

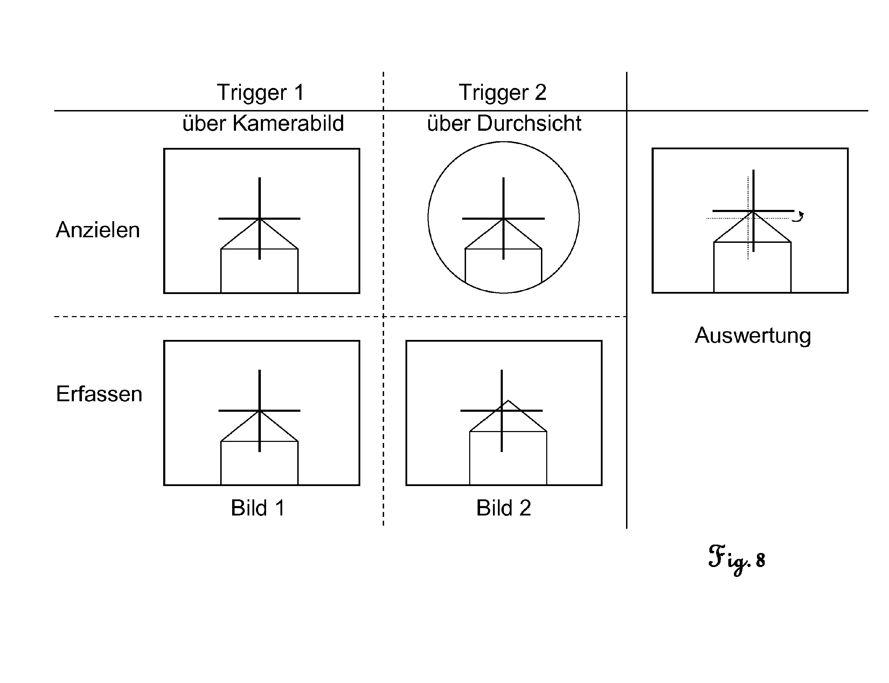

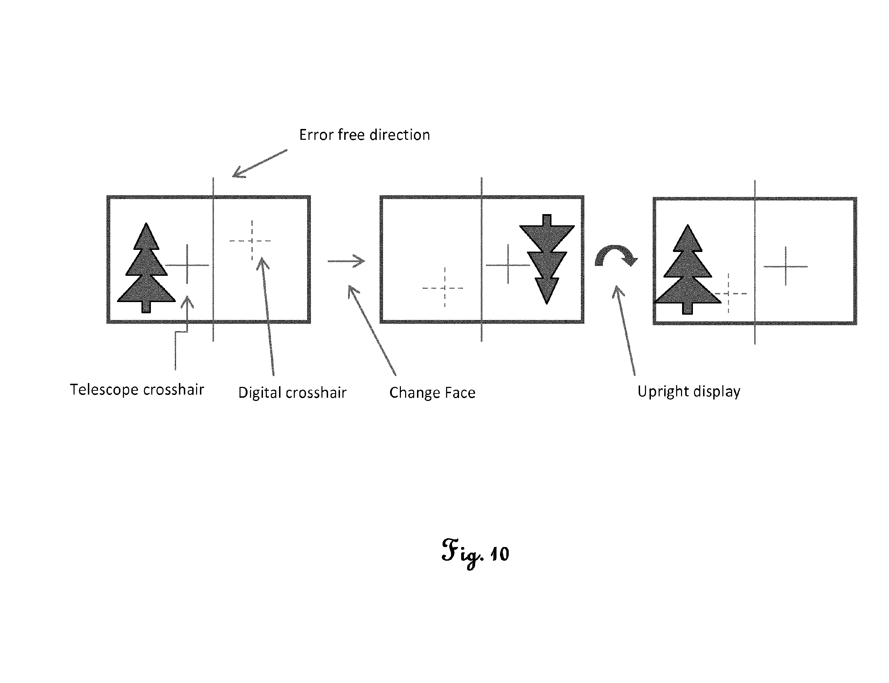

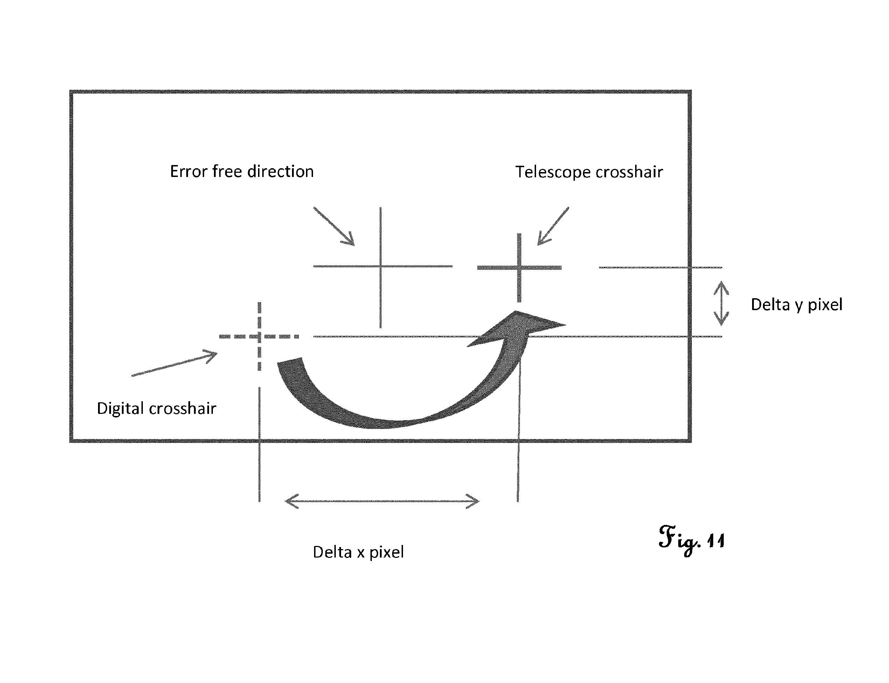

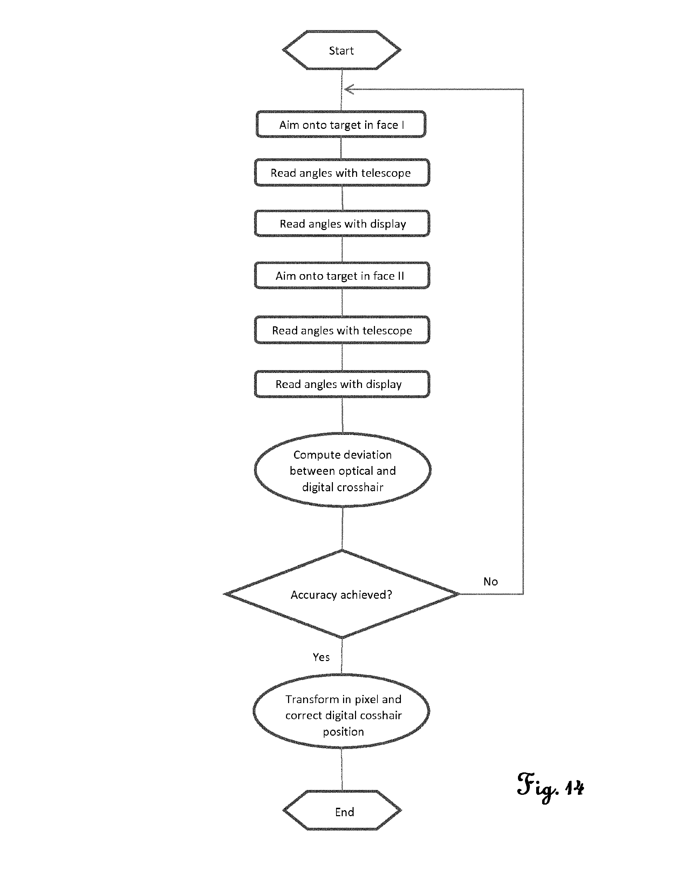

Figuren 7 bis 11 und 14 erklären mögliche Vorgehen und Abläufe im Rahmen der erfindungsgemässen Funktion.

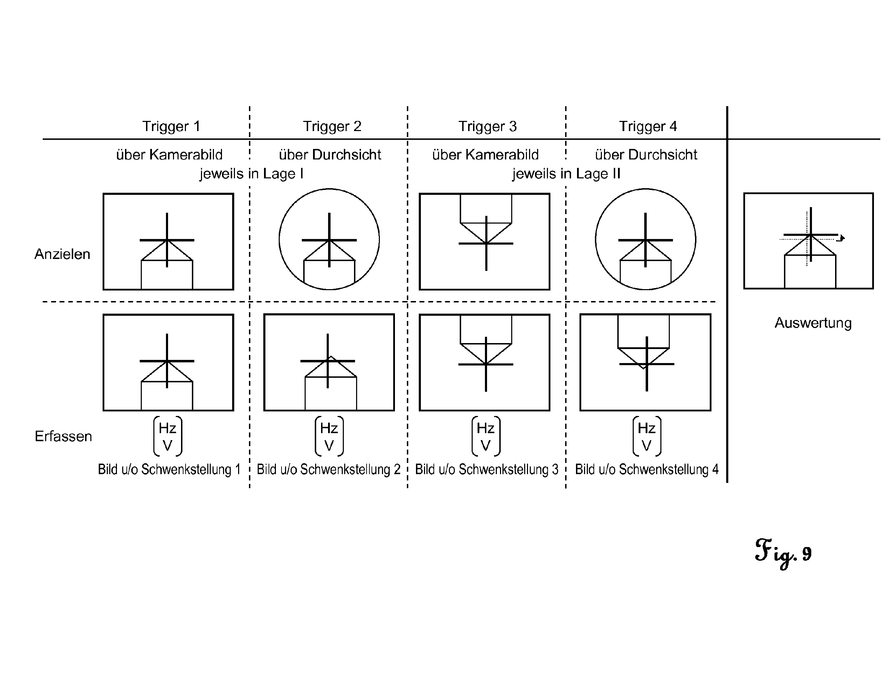

Wie dies in Figur 9 ersichtlich ist, kann das Kamera-Bild mit überlagertem elektronischem Fadenkreuz, welches zum Anzielen des Ziels in der umgeschlagenen zweiten Lage (also in umgeschlagenem Zustand der Anzieleinheit, d.h. in Face II) auf dem Display angezeigt wird, zur Erhöhung des Bedienkomforts für den Benutzer auch automatisch softwareseitig geflippt auf dem Display dargestellt sein.

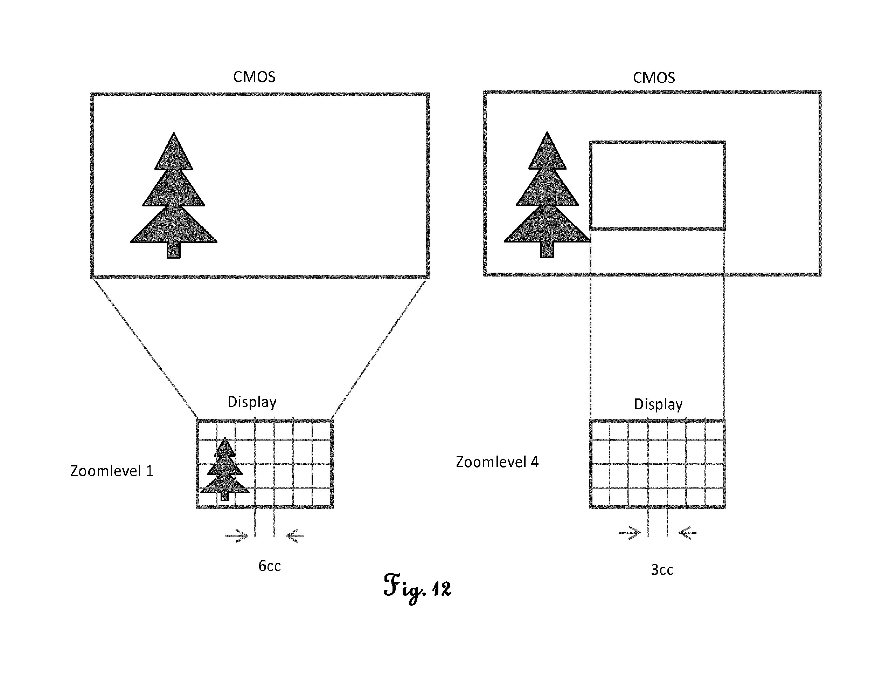

In Figur 12 ist eine Möglichkeit zum digitalen Zoomen im auf dem Display dargestellten Bild veranschaulicht und Figur 13 veranschaulicht das Anzeigen der Markierung für die Anziel-Bildposition derart in einer Grau- und/oder Farbstufendarstellung, dass dadurch benutzeraugenscheinlich die Bild-Position mit Sub-Displaypixelauflösung indiziert wird.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vermessungsgerät, insbesondere Video-Theodolit oder Video-Tachymeter, mit
• einer Basis,
• einer relativ zur Basis um eine erste Achse schwenkbaren Stütze,
• einer relativ zur Stütze um eine zweite Achse schwenkbaren Anzieleinheit mit einer einen optischen Strahlengang definierenden Teleskop-Optik mit
□ einem Objektiv,
□ einer eine Anzielrichtung definierenden physischen Anzielmarkierung, insbesondere einem Retikel,
□ einem Okular und
□ einer Kamera zur Aufnahme eines Bildes durch das Objektiv,
• Winkelmesser zur Messung von Schwenkstellungen von der Stütze und der Anzieleinheit,
• einer Auswerte- und Steuereinheit, die gespeicherte Kalibrierparameter bezüglich einer die Anzielrichtung indizierenden Bildposition im aufgenommenen Bild als Anziel-Bildposition enthält, und
• einem Display zur Anzeige eines aufgenommenen Bildes mit Markierung für die Anziel-Bildposition, insbesondere zur Anzeige des Bildes mit überlagertem elektronischem Fadenkreuz, dessen Fadenkreuzmittelpunkt auf die Anziel-Bildposition fällt,
**gekennzeichnet durch**
eine teilautomatische Funktion zur Überprüfung und/oder Re-Kalibrierung der Anziel-Bildposition,
wobei für die Funktion ein Ablauf definiert ist und dafür entsprechende Ablauf-Informationen in der Auswerte- und Steuereinheit hinterlegt sind, bei welchem Ablauf Anzielungen eines identischen Ziels sukzessiv mindestens einmal unter Verwendung der physischen Anzielmarkierung und mindestens einmal unter Verwendung der Markierung für die Anziel-Bildposition als Anzielhilfe erfolgen,
und wobei im Rahmen der Funktion automatisch gesteuert bzw. durchgeführt **durch** die Auswerte- und Steuereinheit
• auf einen ersten Auslöser hin, der bei erfolgter Anzielung des Ziels unter Verwendung der physischen Anzielmarkierung gebbar ist, automatisch erste Messdaten umfassend eine **durch** die Winkelmesser gemessene erste Schwenkstellung von der Stütze und der Anzieleinheit und/oder ein **durch** die Kamera aufgenommenes erstes Bild erfasst und einem Messdatensatz hinzugefügt werden,
• auf einen zweiten Auslöser hin, der bei erfolgter Anzielung des Ziels unter Verwendung der Markierung für die Anziel-Bildposition gebbar ist, automatisch zu den ersten Messdaten typ-konforme zweite Messdaten umfassend eine **durch** die Winkelmesser gemessene zweite Schwenkstellung von der Stütze und der Anzieleinheit und/bzw. ein **durch** die Kamera aufgenommenes zweites Bild erfasst und dem Messdatensatz hinzugefügt werden, und
• automatisch anhand von einer korrelierten Auswertung des Messdatensatzes die Anziel-Bildposition hinsichtlich Konkordanz mit der **durch** die physische Anzielmarkierung definierten Anzielrichtung überprüft und/oder **durch** Updaten der gespeicherten Kalibrierparameter re-kalibriert wird.

2. Vermessungsgerät nach Anspruch 1,
**dadurch gekennzeichnet, dass**
der Ablauf so definiert ist, dass mehrere Durchgänge von den Anzielungen durchgeführt werden, und
im Rahmen der Funktion automatisch gesteuert durch die Auswerte- und Steuereinheit jeweils
• auf einen weiteren Auslöser hin, der bei durch einen Benutzer erfolgter Anzielung des Ziels unter Verwendung der physischen Anzielmarkierung bzw. unter Verwendung der Markierung für die Anziel-Bildposition als Anzielhilfe gebbar ist, automatisch weitere Messdaten umfassend eine durch die Winkelmesser gemessene weitere Schwenkstellung von der Stütze und der Anzieleinheit und/oder ein durch die Kamera aufgenommenes weiteres Bild erfasst und dem Messdatensatz hinzugefügt werden.

3. Vermessungsgerät nach einem der vorangehenden Ansprüche,
**dadurch gekennzeichnet, dass**
der Ablauf so definiert ist, dass die Anzielungen in einem umgeschlagenen Zustand der Anzieleinheit wiederholt werden, und
im Rahmen der Funktion automatisch gesteuert durch die Auswerte- und Steuereinheit
• auf einen dritten Auslöser hin, der durch einen Benutzer bei im umgeschlagenen Zustand der Anzieleinheit erfolgter Anzielung des Ziels unter Verwendung der physischen Anzielmarkierung gebbar ist, automatisch dritte Messdaten umfassend eine durch die Winkelmesser gemessene dritte Schwenkstellung von der Stütze und der Anzieleinheit und/oder ein durch die Kamera aufgenommenes drittes Bild erfasst und dem Messdatensatz hinzugefügt werden,
• auf einen vierten Auslöser hin, der durch einen Benutzer bei im umgeschlagenen Zustand der Anzieleinheit erfolgter Anzielung des Ziels unter Verwendung der Markierung für die Anziel-Bildposition als Anzielhilfe gebbar ist, automatisch zu den dritten Messdaten typ-konforme vierte Messdaten umfassend eine durch die Winkelmesser gemessene vierte Schwenkstellung von der Stütze und der Anzieleinheit und/bzw. ein durch die Kamera aufgenommenes viertes Bild erfasst und dem Messdatensatz hinzugefügt werden.

4. Vermessungsgerät nach einem der vorangehenden Ansprüche, wobei die ersten und zweiten Messdaten zumindest eine erste und zweite Schwenkstellung umfassen,
**dadurch gekennzeichnet, dass**
im Rahmen der Funktion bei der korrelierten Auswertung des Messdatensatzes ein Unterschied zwischen der ersten und der zweiten Schwenkstellung - unter Anwendung von gespeicherten Parametern bzgl. der Kamerageometrie und deren optische Projektionseigenschaften - in einen Bildpositionsversatz übersetzt wird, um welcher die Anziel-Bildposition von einer neuen Soll-Anziel-Bildposition abweicht, und dieser Bildpositionsversatz ggf. auf die Anziel-Bildposition angewendet wird, sodass die gespeicherte Kalibrierparameter derart upgedatet werden, dass diese die neue Soll-Anziel-Bildposition als Anziel-Bildposition wiedergeben.

5. Vermessungsgerät nach einem der vorangehenden Ansprüche, wobei die ersten und zweiten Messdaten zumindest ein erstes und zweites Bild umfassen, **dadurch gekennzeichnet, dass**
im Rahmen der Funktion bei der korrelierten Auswertung des Messdatensatzes anhand von Bilderkennung und unter Heranziehung des zweiten Bilds eine Identifikation des Ziels im ersten Bild erfolgt und eine Bildposition des identifizierten Ziels im ersten Bild als Ziel-Bildposition bestimmt wird und anhand eines Vergleichs von dieser Ziel-Bildposition mit der Anziel-Bildposition die Anziel-Bildposition überprüft und/oder durch Updaten der gespeicherten Kalibrierparameter re-kalibriert wird, insbesondere wobei die gespeicherte Kalibrierparameter derart upgedatet werden, dass diese neu die ermittelte Ziel-Bildposition als die Anziel-Bildposition wiedergeben.

6. Vermessungsgerät nach einem der vorangehenden Ansprüche, wobei der Messdatensatz redundante Messdaten enthält,
**dadurch gekennzeichnet, dass**
eine Redundanz hinsichtlich der Überprüfung und/oder Re-Kalibrierung im Rahmen der Funktion automatisch durch die Auswerte- und Steuereinheit genutzt wird für
• eine Mittelung, sodass die Genauigkeit für die Überprüfung und/oder Re-Kalibrierung steigerbar ist,
• eine Ermittlung eines Bestimmtheitsgrads oder Gütegrads der Überprüfung und/oder Re-Kalibrierung, und/oder
• eine konkomitierende Überprüfung und/oder Re-Kalibrierung von mindestens einem von folgenden weiteren Kalibrierparametern:
□ einem Parameter bezüglich einem Richtungsfehler als Deviation der durch die physische Anzielmarkierung definierten Anzielrichtung von einer tatsächlichen Messachse [auch Kipp- und Stehachsenfehler genannt],
□ einem Parameter bezüglich einem Fehler der Winkelmesser,
□ einem Parameter bezüglich einer Kamerageometrie der Kamera,
□ einem Parameter bezüglich einer Projektionseigenschaft der Kamera oder
□ einem Parameter bezüglich eines Fehlers der optischen Achse der Kamera.

7. Vermessungsgerät nach einem der vorangehenden Ansprüche, wobei der Ablauf so definiert ist, dass mehrere Durchgänge von den Anzielungen durchgeführt werden,
**dadurch gekennzeichnet, dass**
im Rahmen der Funktion die durch die Auswerte- und Steuereinheit automatisch durchgeführte korrelierte Auswertung des Messdatensatzes nach Durchführung von einem definierten Durchgang der mehrere Durchgänge von den Anzielungen, insbesondere nach jedem der Durchgänge, als Zwischenauswertung durchgeführt wird und für die bis zur jeweiligen Zwischenauswertung angesammelten Messdaten ein Bestimmtheitsgrad und/oder Gütegrad hinsichtlich einer Neubestimmung der Anziel-Bildposition ermittelt wird, und wobei die Auswerte-und Steuereinheit anhand dieses Bestimmtheitsgrad eine Information ableitet, ob weitere Durchgänge von Anzielungen durchzuführen sind oder ob die Funktion zu beenden ist, insbesondere wobei diese Information als Handlungs-Empfehlung dem Benutzer vermittels vorgesehener Ausgabemittel, insbesondere durch das Display visuell, ausgegeben wird.

8. Vermessungsgerät nach einem der vorangehenden Ansprüche,
**dadurch gekennzeichnet, dass**
Ausgabemittel zur Ausgabe von Indikatoren vorhanden sind, insbesondere wobei das Display die Ausgabemittel darstellen zur visuellen Ausgabe, welche Ausgabemittel durch die Auswerte- und Steuereinheit im Rahmen der Funktion derart automatisch angesteuert werden, dass ein Benutzer anhand der ausgegebenen Indikatoren durch den Ablauf von Anzielungen geführt wird, insbesondere wobei
• ein Indikator angezeigt wird zur Aufforderung des Benutzers zur jeweiligen Durchführung einer der Anzielungen entweder unter Verwendung der physischen Anzielmarkierung oder unter Verwendung der Markierung für die Anziel-Bildposition als Anzielhilfe, insbesondere wobei zudem jeweils indiziert wird, ob die jeweilige Anzielung in umgeschlagenem Zustand der Anzieleinheit durchzuführen ist oder nicht,
• ein Indikator angezeigt wird als Angabe dafür, dass eine jeweilige automatische Erfassung von Messdaten auf einen jeweiligen Auslöser hin erfolgreich abgeschlossen ist,
• nach Abschluss einer jeweiligen automatischen Erfassung von Messdaten auf einen jeweiligen Auslöser hin ein Indikator angezeigt wird als Angabe dafür, dass und welche nächste Anzielung im Rahmen des definierten Ablaufs durchzuführen ist, und/oder
• nach Abschluss einer jeweiligen automatischen Erfassung von Messdaten auf einen jeweiligen Auslöser hin ein Indikator angezeigt wird als Angabe dafür, das alle Anzielungen des Ablaufs abgeschlossen sind, insbesondere zudem mit ergänzender Angabe darüber, ob der anhand der erfolgten Anzielungen gesammelte Messdatensatz die Bild-Position hinlänglich profund überprüfbar macht bzw. die Bild-Position mit hinreichender Genauigkeit und Bestimmtheit updatebar macht.

9. Vermessungsgerät nach einem der vorangehenden Ansprüche,
**dadurch gekennzeichnet, dass**
• ein Temperatursensor vorgesehen ist,
• die gespeicherten Kalibrierparameter eine temperaturabhängige Funktion für die Anziel-Bildposition enthält, sodass die auf dem Display anzeigbare Markierung für die Anziel-Bildposition entsprechend einer aktuellen Temperatur setzbar ist, und
• im Rahmen der Funktion automatisch gesteuert durch die Auswerte- und Steuereinheit durch den Temperatursensor eine Temperatur erfasst wird und diese Temperatur für die Überprüfung bzw. Re-Kalibrierung berücksichtigt wird.

10. Vermessungsgerät nach einem der vorangehenden Ansprüche,
**dadurch gekennzeichnet, dass**
• durch die Kamera eine Kamerapixelauflösung definiert ist und das aufnehmbare Bild eine definierte Bildpixelauflösung aufweist, und
• im Rahmen der Funktion automatisch durch die Auswerte- und Steuereinheit die Anziel-Bildposition mit Sub-Bildpixelauflösung überprüft und/oder durch Updaten der gespeicherten Kalibrierparameter re-kalibriert wird.

11. Vermessungsgerät nach einem der vorangehenden Ansprüche,
**dadurch gekennzeichnet, dass**
• durch das Display eine Displaypixelauflösung definiert ist und
• die Markierung für die Anziel-Bildposition derart in einer Grau- und/oder Farbstufendarstellung angezeigt wird, dass dadurch benutzeraugenscheinlich die Bild-Position mit Sub-Displaypixelauflösung indiziert wird.

12. Vermessungsgerät nach einem der vorangehenden Ansprüche,
**dadurch gekennzeichnet, dass**
in die Anzieleinheit ferner ein koaxialer Laser-Entfernungsmesser integriert ist.

13. Vermessungsgerät nach einem der vorangehenden Ansprüche,
**dadurch gekennzeichnet, dass**
• das Vermessungsgerät eine mindestens die Basis, die Stütze, die Anzieleinheit und die Winkelmesser - sowie insbesondere auch die Auswerte- und Steuereinheit und das Display - umfassende Basisstation aufweist,
• insbesondere wobei das Vermessungsgerät neben der Basisstation auch eine datenmässig mit der Basisstation verbundene und körperlich unabhängige Peripherie-Fernsteuer-Einheit aufweist, wobei das Display und die Auswerte- und Steuereinheit entweder in der Peripherie-Fernsteuer-Einheit, oder in der Basisstation, oder - je nach Bedarf verwendbar - in der Peripherie-Fernsteuer-Einheit und der Basisstation vorgesehen sind.

14. Mit einem Vermessungsgerät durchzuführendes Verfahren zur Überprüfung und/oder Re-Kalibrierung einer Anziel-Bildposition, die durch Kalibrierparameter gegeben ist und für die eine Markierung als Anzielhilfe auf einem Display des Vermessungsgeräts zusammen mit einem durch eine Kamera des Vermessungsgeräts anzeigbarem Bild darstellbar ist, wobei die Anziel-Bildposition auf eine durch eine physische Anzielmarkierung des Vermessungsgeräts definierte Anzielrichtung Bezug nimmt,
und wobei das Vermessungsgerät ausgestattet ist mit
• einer Basis,
• einer relativ zur Basis um eine erste Achse schwenkbaren Stütze,
• einer relativ zur Stütze um eine zweite Achse schwenkbaren Anzieleinheit mit einer einen optischen Strahlengang definierenden Teleskop-Optik mit
□ einem Objektiv,
□ der die Anzielrichtung definierenden physischen Anzielmarkierung, insbesondere einem Retikel,
□ einem Okular und
□ der Kamera zur Aufnahme eines Bildes durch das Objektiv,
• Winkelmesser zur Messung von Schwenkstellungen von der Stütze und der Anzieleinheit, und
• dem Display zur Anzeige eines aufgenommenen Bildes zusammen mit der Markierung, insbesondere zur Anzeige des Bildes mit überlagertem elektronischem Fadenkreuz, dessen Fadenkreuzmittelpunkt auf die Anziel-Bildposition fällt,
**gekennzeichnet durch**
einen Ablauf von mindestens einem Durchgang von
• einem Anzielen eines Ziels unter Verwendung der physischen Anzielmarkierung,
• einem Erfassen von ersten Messdaten umfassend eine **durch** die Winkelmesser gemessene erste Schwenkstellung von der Stütze und der Anzieleinheit und/oder ein **durch** die Kamera aufgenommenes erstes Bild und einem Hinzufügen dieser ersten Messdaten zu einem Messdatensatz,
• einem Anzielen des identischen Ziels unter Verwendung der Markierung für die Anziel-Bildposition als Anzielhilfe,
• einem Erfassen von zu den ersten Messdaten typ-konformen zweiten Messdaten umfassend eine **durch** die Winkelmesser gemessene zweite Schwenkstellung von der Stütze und der Anzieleinheit und/oder ein **durch** die Kamera aufgenommenes zweites Bild und einem Hinzufügen dieser zweiten Messdaten zum Messdatensatz,
sowie ferner ein automatisch seitens des Vermessungsgeräts erfolgendes korreliertes Auswerten des Messdatensatzes, wobei die Anziel-Bildposition hinsichtlich Konkordanz mit der **durch** die physische Anzielmarkierung definierten Anzielrichtung überprüft und/oder **durch** Updaten der Kalibrierparameter re-kalibriert wird.

15. Computerprogrammprodukt mit Programmcode, der auf einem maschinenlesbaren Träger gespeichert ist und gespeicherte Informationen enthält über
• eine Anziel-Bildposition, die durch Kalibrierparameter gegeben ist und für die eine Markierung als Anzielhilfe auf einem Display eines Vermessungsgeräts zusammen mit einem durch eine Kamera des Vermessungsgeräts anzeigbarem Bild darstellbar ist, wobei die Anziel-Bildposition auf eine durch eine physische Anzielmarkierung definierte Anzielrichtung des Vermessungsgeräts Bezug nimmt, sowie
• einen Ablauf von Anzielungen eines identischen Ziels sukzessiv mindestens einmal unter Verwendung der physischen Anzielmarkierung und mindestens einmal unter Verwendung der Markierung für die Anziel-Bildposition als Anzielhilfe,
zum - wenn das Programm auf der Steuer- und Auswerteeinheit des Vermessungsgeräts nach einem der Ansprüche 1 bis 13 ausgeführt wird erfolgenden - automatischen Steuern bzw. Durchführen der folgenden Schritte:
• auf einen ersten Auslöser hin, der bei erfolgter Anzielung des Ziels unter Verwendung der physischen Anzielmarkierung gebbar ist, erfolgendes Erfassen von ersten Messdaten umfassend eine über die Winkelmesser gemessene erste Schwenkstellung von der Stütze und der Anzieleinheit und/oder einem durch die Kamera aufgenommenen ersten Bild und Hinzufügen dieser ersten Messdaten zu einem Messdatensatz,
• auf einen zweiten Auslöser hin, der bei erfolgter Anzielung des Ziels unter Verwendung der Markierung für die Anziel-Bildposition als Anzielhilfe gebbar ist, erfolgendes Erfassen von zu den ersten Messdaten typ-konformen zweiten Messdaten umfassend eine durch die Winkelmesser gemessene zweite Schwenkstellung von der Stütze und der Anzieleinheit und/oder einem durch die Kamera aufgenommenen zweiten Bild und Hinzufügen dieser zweiten Messdaten zum Messdatensatz,
• Überprüfen und/oder durch Updaten der gespeicherten Kalibrierparameter erfolgendes Re-Kalibrieren der Anziel-Bildposition hinsichtlich Konkordanz mit der durch die physische Anzielmarkierung definierten Anzielrichtung anhand von einer korrelierten Auswertung des Messdatensatzes.
